# EUROPÄISCHE PATENTANMELDUNG

(11) **EP 1 128 200 A2**
(43) Veröffentlichungstag der Anmeldung: **29.08.2001**
(21) Anmeldenummer: 00123968.0
(22) Anmeldetag: 03.11.2000
(51) Int. Cl.: G02B 21/24

(54) **Mikroskop-Aufbau**

(30) Priorität: 27.01.2000 DE 10003570
(71) Anmelder: Leica Microsystems Heidelberg GmbH, 68165 Mannheim (DE)
(72) Erfinder: Knebel, Werner, Dr., 76709 Kronau (DE)
(74) Vertreter: Maisch, Thomas

(57) **Zusammenfassung**

Ein Mikroskop-Aufbau, insbesondere für die konfokale Scan-Mikroskopie, mit einer Lichtquelle (1) zur Beleuchtung eines zu untersuchenden Objekts (6) und mindestens einem Fluoreszenzlicht-Detektor (11, 14) zur Detektion von in dem Objekt (6) erzeugtem Fluoreszenzlicht (10, 13) und mindestens einem Transmissionslicht-Detektor (16) zur Detektion von durch das Objekt (6) tretendem Transmissionslicht (15) ist im Hinblick auf eine sichere Durchführung unterschiedlichster Experimente mit jeweils hohem Detektionsgrad derart ausgestaltet und weitergebildet, dass die Fluoreszenzlicht- und Transmissionslicht-Detektoren (11, 14; 16) derart angeordnet sind, dass eine simultane Detektion von Fluoreszenz- und Transmissionslicht (10, 13; 15) ermöglicht ist.

## Beschreibung

Die Erfindung betrifft einen Mikroskop-Aufbau, insbesondere für die konfokale Scan-Mikroskopie, mit einer Lichtquelle zur Beleuchtung eines zu untersuchenden Objekts und mindestens einem Fluoreszenzlicht-Detektor zur Detektion von in dem Objekt erzeugtem Fluoreszenzlicht und mindestens einem Transmissionslicht-Detektor zur Detektion von durch das Objekt tretendem Transmissionslicht.

Mikroskop-Aufbauten der eingangs genannten Art sind aus der Praxis bekannt und existieren in den unterschiedlichsten Ausführungsformen. Ein Beispiel eines derartigen Mikroskop-Aufbaus wird durch ein konfokales Scan-Mikroskop gebildet, bei dem ein zu untersuchendes Objekt mit einem Lichtstrahl abgerastert wird. Das Mikroskop umfasst im allgemeinen eine Lichtquelle und eine Fokussieroptik, mit der das Licht der Quelle auf eine Lochblende fokussiert wird. Dabei sind ein Strahlteiler, eine Scaneinrichtung zur Strahlsteuerung, eine Mikroskopoptik, eine Detektionsblende und Detektoren zum Nachweis von Detektions- bzw. Fluoreszenzlicht vorgesehen.

Das Beleuchtungslicht wird meist über den Strahlteiler eingekoppelt. Der Fokus des Lichtstrahls wird mit der Scaneinrichtung in einer Probenebene bewegt. Hierzu sind üblicherweise zwei Spiegel verwendet, die verkippt werden, wobei die Ablenkachsen meist senkrecht aufeinanderstehen, so dass ein Spiegel in X- und der andere in Y-Richtung ablenkt. Die Verkippung der Spiegel wird bspw. mit Hilfe von Galvanometer-Stellelementen bewerkstelligt. Das von der Probe kommende Fluoreszenz- oder Reflexionslicht gelangt in dieser meist üblichen Descan-Anordnung über dieselben Scanspiegel zurück zum Strahlteiler und passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch Abrastern des Objekts zu einem dreidimensionalen Bild führt. Beleuchtung und Detektion finden hierbei objektivseitig, d. h. auf Seiten der Mikroskopoptik statt.

Es ist auch möglich, in einer Durchlichtanordnung bspw. das Fluoreszenzlicht oder das Transmissionslicht - die Transmission des Anregungslichts - kondensorseitig, d.h. auf der Seite eines nach dem Objekt angeordneten Kondensors, zu detektieren. Der Detektionslichtstrahl gelangt dann nicht über die Scanspiegel zum Detektor. Eine derartige Anordnung wird als Non-Descan-Anordnung bezeichnet.

Für die Detektion des Fluoreszenzlichts wäre in der Durchlichtanordnung eine kondensorseitige Detektionsblende nötig, um - wie in der beschriebenen Descan-Anordnung - eine dreidimensionale Auflösung zu erreichen. Im Fall der Zweiphotonenanregung kann jedoch auf eine kondensorseitige Detektionsblende verzichtet werden, da die Anregungswahrscheinlichkeit vom Quadrat der Photonendichte bzw. der Intensität abhängt, die naturgemäß im Fokus viel höher ist als in den Nachbarregionen. Das zu detektierende Fluoreszenzlicht stammt daher mit großer Wahrscheinlichkeit zum allergrößten Teil aus der Fokusregion, was eine weitere Differenzierung von Fluoreszenzphotonen aus der Fokusregion von Fluoreszenzphotonen aus den Nachbarregionen mit einer Blendenanordnung überflüssig macht.

Insbesondere vor dem Hintergrund einer ohnehin geringen Ausbeute an Fluoreszenzphotonen bei der Zweiphotonenanregung ist eine Non-Descan-Anordnung, bei der im allgemeinen auf dem Detektionslichtweg weniger Licht verloren geht, interessant. Dennoch sind auch bei dieser Art der Beobachtung von Fluoreszenzlicht bspw. Zellumrisse aufgrund der Nichtmarkierung in lebenden Präparaten nicht ausreichend gut detektierbar, so dass man sich wünschen würde, gleichzeitig das Transmissionslicht beobachten zu können, das klare Rückschlüsse zuließe.

Es gibt nun Mikroskop-Aufbauten, bei denen einerseits eine objektivseitige Fluoreszenzdetektion und andererseits eine kondensorseitige Transmissionsdetektion möglich ist. Zum Wechsel von der objektivseitigen Fluoreszenzdetektion auf die kondensorseitige Transmissionsdetektion und umgekehrt ist hierbei jedoch ein mechanischer Umschaltvorgang erforderlich, bei dem Spiegel und Filter mechanisch verschoben werden müssen. Dabei können Erschütterungen des Objekts auftreten, die das Objekt zerstören. Insbesondere Experimente mit Mikropipetten-Anordnungen sind somit fast ausgeschlossen.

Der vorliegenden Erfindung liegt daher die Aufgabe zugrunde, einen Mikroskop-Aufbau der eingangs genannten Art anzugeben, bei dem unterschiedlichste Experimente, insbesondere Experimente mit Mikropipetten-Anordnungen, mit jeweils hohem Detektionsgrad sicher möglich sind.

Die voranstehende Aufgabe wird durch einen Mikroskop-Aufbau mit den Merkmalen des Patentanspruchs 1 gelöst. Danach ist der Mikroskop-Aufbau derart ausgestaltet, dass die Fluoreszenzlicht- und Transmissionslicht-Detektoren derart angeordnet sind, dass eine simultane Detektion von Fluoreszenz- und Transmissionslicht ermöglicht ist.

In erfindungsgemäßer Weise ist erkannt worden, dass durch geschickte Anordnung der Fluoreszenzlicht- und Transmissionslicht-Detektoren die obige Aufgabe auf überraschend einfache Weise gelöst ist. Hierzu sind die Fluoreszenzlicht- und Transmissionslicht-Detektoren derart anzuordnen, dass eine simultane Detektion von Fluoreszenzlicht und Transmissionslicht ermöglicht ist. Ein Umschalten zwischen der Transmissionslicht- und Fluoreszenzlicht-Detektion ist dabei nicht mehr erforderlich, so dass mechanische Erschütterungen der Probe bzw. des Objekts vermieden sind. Somit ist ein hoher Detektionsgrad sowohl hinsichtlich der Detektion von Transmissionslicht als auch hinsichtlich der Detektion von Fluoreszenzlicht auch bei empfindlichen Objekten realisiert.

Folglich ist mit dem erfindungsgemäßen Mikroskop-Aufbau ein Mikroskop-Aufbau angegeben, bei dem unterschiedlichste Experimente, insbesondere Experimente mit Mikropipetten-Anordnungen, mit jeweils hohem Detektionsgrad sicher möglich sind.

In einer konkreten Ausführungsform könnte mindestens ein Fluoreszenzlicht-Detektor auf der der Lichtquelle abgewandten Seite des Objekts angeordnet sein. Alternativ oder zusätzlich hierzu könnte mindestens ein Transmissionslicht-Detektor auf der der Lichtquelle abgewandten Seite des Objekts angeordnet sein. Dadurch ist bspw. eine simultane Detektion von Fluoreszenz- und Transmissionslicht mittels Detektoren möglich, die jeweils auf der der Lichtquelle abgewandten Seite des Objekts angeordnet sind. Dies hat den Vorteil einer übersichtlichen Anordnung der Detektoren in einem bestimmten Bereich des Mikroskop-Aufbaus.

Des weiteren könnte auf der der Lichtquelle abgewandten Seite des Objekts ein Kondensor für das Transmissionslicht und das Fluoreszenzlicht angeordnet sein. Im Hinblick auf eine besonders effektive Lichtsammlung könnte die Apertur des Kondensors größer als die Apertur eines zwischen der Lichtquelle und dem Objekt angeordneten Objektiv sein. Bei Vorliegen eines derartigen Kondensors kann bei entsprechender Anordnung der Detektoren von einer kondensorseitigen Detektion von Fluoreszenzlicht und Transmissionslicht gesprochen werden.

Zur separaten Detektion von Transmissionslicht und Fluoreszenzlicht könnten das Transmissionslicht und das Fluoreszenzlicht auf der der Lichtquelle abgewandten Seite des Objekts, vorzugsweise nach Durchgang durch den Kondensor, aufspaltbar sein. Hierdurch wäre eine räumliche Trennung des Fluoreszenzlichts vom Transmissionslicht erreicht. Dies ermöglicht die separate Messung der entsprechenden Lichtleistungen in verschiedenen Detektoren.

Im konkreten könnte zur Aufspaltung mindestens ein Farbstrahlteiler eingesetzt sein. Dabei könnten mehrere Farbstrahlteiler hintereinander angeordnet sein, um eine Abspaltung unterschiedlicher Wellenlängen oder Wellenlängenbereiche zu ermöglichen.

Alternativ hierzu könnte zur Aufspaltung mindestens ein teildurchlässiger Spiegel eingesetzt sein. Diesem Spiegel oder diesen Spiegeln könnte ein Band- oder Blockfilter nachgeordnet sein. Auch bei der Verwendung von Spiegeln als Aufspaltungsbauteil könnten mehrere derartige Spiegel hintereinander, ggf. mit einem nachgeordneten Band- oder Blockfilter, angeordnet sein. Auch hierdurch ist eine Aufspaltung des Fluoreszenzlichts in mehrere Spektralbereiche möglich.

Alternativ zur Verwendung von Farbstrahlteilern oder Spiegeln könnte zur Aufspaltung ein Multibanddetektor eingesetzt werden, der bspw. in der DE 199 02 625 A1 beschrieben ist. Mit einem derartigen Multibanddetektor ist ebenfalls eine Aufspaltung des Fluoreszenzlichts in mehrere Spektralbereiche möglich.

Das Fluoreszenzlicht und das Transmissionslicht könnten bei einer besonders kompakten Ausgestaltung des Mikroskops im selben Detektor detektierbar sein. Im Hinblick auf eine möglichst klare Differenzierung könnten das Fluoreszenzlicht und das Transmissionslicht jedoch in verschiedenen Detektoren detektierbar sein.

Der erfindungemäße Mikroskop-Aufbau kann insbesondere zur Interferenzkontrast-Mikroskopie verwendet werden. Hierzu könnte zwischen der Lichtquelle und dem Objekt, vorzugsweise vor dem Objektiv, eine erste Polarisationseinrichtung und nach dem Objekt, vorzugsweise nach dem Kondensor, eine zweite Polarisationseinrichtung angeordnet sein. Eine derartige Polarisationseinrichtung könnte auch eine Polarisationsaufspaltungseinrichtung sein, die beispielsweise bereits polarisiertes Licht in senkrecht zueinander polarisierte Komponenten aufspalten könnte. Die Polarisationseinrichtungen könnten in besonders einfacher Weise durch Prismen gebildet sein. Hierbei bieten sich insbesondere Wollaston-Prismen an.

Zur Feststellung, ob eine Drehung der Linearpolarisationsebene stattgefunden hat, könnte vor dem Transmissionslicht-Detektor ein Polarisationsfilter angeordnet sein. Der Polarisationsfilter muss dabei so orientiert sein, dass er einen Beleuchtungslichtstrahl ohne Beeinflussung mittels einer Polarisationseinrichtung blockieren würde.

Der erfindungsgemäße Mikroskop-Aufbau könnte auch bei der DurchlichtkontrastMikroskopie eingesetzt werden. Hierzu könnte im Strahlengang eine Segmentoptik, Segmentpolarisationsoptik, Segmentblende, Segmentphasenblende oder ein Segmentphasenfilter angeordnet sein. Dabei könnte die Segmentoptik, Segmentpolarisationsoptik, Segmentblende, Segmentphasenblende oder der Segmentphasenfilter in einer Fourier-Ebene des Strahlengangs angeordnet sein. Hierzu könnte die Segmentoptik, Segmentpolarisationsoptik, Segmentblende, Segmentphasenblende oder der Segmentphasenfilter in der Fourier-Ebene unmittelbar vor dem Transmissionslicht-Detektor angeordnet sein. Hierdurch ließe sich bspw. das Dodt-Verfahren oder das Hoffman-Verfahren realisieren. Dabei könnte simultan auch das Fluoreszenzlicht beobachtet werden, wobei dies bei einer Einphotonenanregung nicht konfokal erfolgen kann.

Hinsichtlich einer weiteren besonderen Ausgestaltung des Mikroskop-Aufbaus könnte eine Zusatz-Lichtquelle auf der der Lichtquelle abgewandten Seite des Objekts - bei Vorhandensein eines Kondensors kondensorseitig - angeordnet sein. Hierdurch könnte das Objekt ggf. kondensorseitig beleuchtet werden, wobei eine Detektion dann auf der der Lichtquelle zugewandten Seite des Objekts - objektivseitig - erfolgen könnte. Die Zusatz-Lichtquelle könnte in einfacher Weise eine Weißlichtquelle sein.

Zur Phasenkontrastierung könnte der Zusatz-Lichtquelle eine Segmentoptik, Segmentpolarisationsoptik, Segmentblende, Segmentphasenblende oder ein Segmentphasenfilter zugeordnet sein. In besonders günstiger Weise könnte die Segmentoptik, Segmentpolarisationsoptik, Segmentblende, Segmentphasenblende oder der Segmentphasenfilter in der Fourier-Ebene vor der Zusatz-Lichtquelle angeordnet sein.

Auf der der Lichtquelle zugewandten Seite des Objekts könnte eine Scaneinrichtung angeordnet sein. Das von der Zusatz-Lichtquelle erzeugte Licht könnte ebenfalls von der Scaneinrichtung abgelenkt werden, bevor es auf einen Transmissionslicht-Detektor oder Scannerdetektor trifft. Hierzu könnte auf der der Lichtquelle zugewandten Seite des Objekts, vorzugsweise auf der dem Objekt abgewandten Seite der Scaneinrichtung, mindestens ein Transmissionslicht-Detektor angeordnet sein.

Als Lichtquelle könnte in besonders vorteilhafter Weise ein Laser verwendet sein. Es ist jedoch auch die Verwendung anderer geeigneter Lichtquellen denkbar.

Der erfindungsgemäße Mikroskop-Aufbau ist insbesondere zur simultanen Detektion eines oder mehrerer Wellenlängenbereiche des durch Mehrphotonenanregung erzeugten Fluoreszenzlichts und/oder des durch Einphotonenanregung, SHG - Second Harmonic Generation -, erzeugten Fluoreszenzlichts und des Transmissionslichts geeignet.

Bei einer speziellen Anwendung könnte der erfindungsgemäße Mikroskop-Aufbau auch dazu verwendet werden, Fluoreszenzlicht verschiedener Wellenlängenbereiche und Transmissionslicht sequentiell und nicht simultan zu detektieren, ohne dass mechanische Umschaltvorgänge, bspw. Verschiebung oder Austausch von Strahlteilern oder Filtern, erforderlich sind, die zwangsläufig Erschütterungen der Probe verursachen. Der Mikroskop-Aufbau ist daher insbesondere auch zur sequentiellen Detektion verschiedener Fluoreszenzspektralbereiche und/oder von Transmissionslicht bei Anwendungen mit Objekten geeignet, die von außen bspw. durch Mikromanipulatoren, Mikropipetten oder ähnlichem beeinflusst werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung mehrerer Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: in einer schematischen Darstellung ein erstes Ausführungsbeispiel eines erfindungsgemäßen Mikroskop-Aufbaus,
- Fig. 2: in einer schematischen Darstellung ein zweites Ausführungsbeispiel eines erfindungsgemäßen Mikroskop-Aufbaus mit zwei Polarisationsprismen,
- Fig. 3: in einer schematischen Darstellung ein drittes Ausführungsbeispiel eines erfindungsgemäßen Mikroskop-Aufbaus mit einer Segmentblende und
- Fig. 4: in einer schematischen Darstellung ein viertes Ausführungsbeispiel eines erfindungsgemäßen Mikroskop-Aufbaus mit einer Zusatz-Lichtquelle.

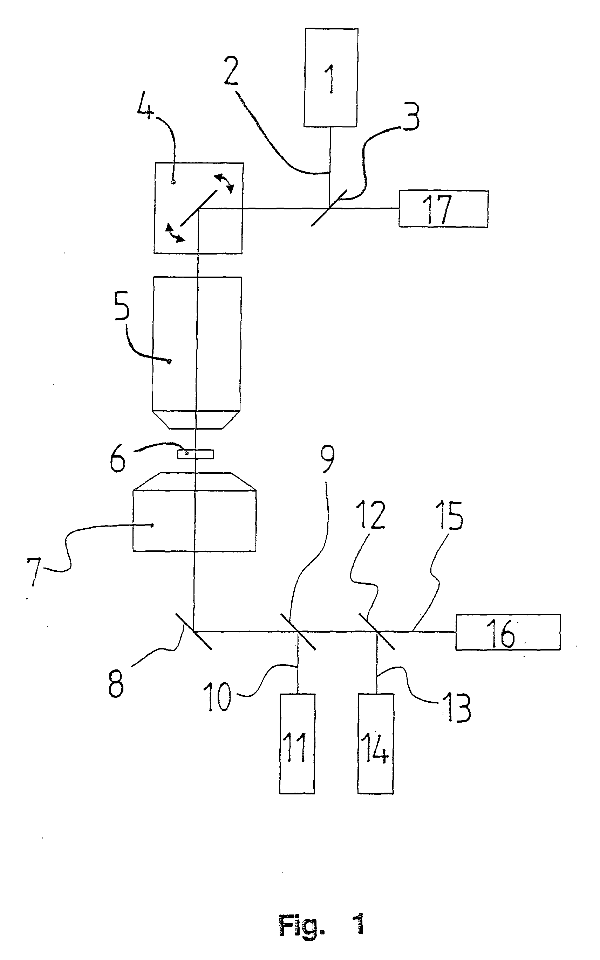

Fig. 1 zeigt in einer schematischen Darstellung ein erstes Ausführungsbeispiel eines erfindungsgemäßen Mikroskop-Aufbaus. Bei dem Mikroskop-Aufbau handelt es sich um ein konfokales Laser-Scanning-Mikroskop. Das Mikroskop weist eine als Laser ausgebildete Lichtquelle 1 auf. Die Lichtquelle 1 emittiert einen Beleuchtungslichtstrahl 2, der über einen Hauptstrahlteiler 3 zu einer Scaneinrichtung 4 reflektiert wird. Die Scaneinrichtung 4 führt den Beleuchtungslichtstrahl 2 durch eine Mikroskopoptik bzw. ein Objektiv 5 hindurch über ein Objekt 6. Sowohl das durch das Objekt 6 hindurchtretende Transmissionslicht als auch das im Objekt 6 erzeugte Fluoreszenzlicht gelangt über einen Kondensor 7 und einen Umlenkspiegel 8 zu einem ersten Farbstrahlteiler 9, der den spektral niedrigerwelligen Bereich 10 des Fluoreszenzlichts abspaltet und zu einem Fluoreszenzlicht-Detektor 11 reflektiert. Über einen Farbstrahlteiler 12 wird der spektral höherwellige Bereich 13 des Fluoreszenzlichts zu einem weiteren Fluoreszenzlicht-Detektor 14 reflektiert. Das Transmissionslicht 15 gelangt zu einem in Geradeausrichtung angeordneten Transmissionslicht-Detektor 16.

Der Mikroskop-Aufbau weist demnach eine Lichtquelle 1 zur Beleuchtung eines zu untersuchenden Objekts 6 und zwei Fluoreszenzlicht-Detektoren 11 und 14 zur Detektion von in dem Objekt 6 erzeugtem Fluoreszenzlicht 10 und 13 und einen Transmissionslicht-Detektor 16 zur Detektion von durch das Objekt 6 tretendem Transmissionslicht 15 auf. Dabei sind die Fluoreszenzlicht- und Transmissionslicht-Detektoren 11, 14 und 16 derart angeordnet, dass eine simultane Detektion von Fluoreszenz- und Transmissionslicht 10, 13 und 15 ermöglicht ist.

Der in Fig. 1 gezeigte Mikroskop-Aufbau weist des weiteren einen Detektor 17 auf, der objektivseitig angeordnet ist.

Beide Fluoreszenzlicht-Detektoren 11 und 14 sind auf der der Lichtquelle 1 abgewandten Seite des Objekts 6 angeordnet. Des weiteren ist der Transmissionslicht-Detektor 16 auf der der Lichtquelle 1 abgewandten Seite des Objekts 6 angeordnet.

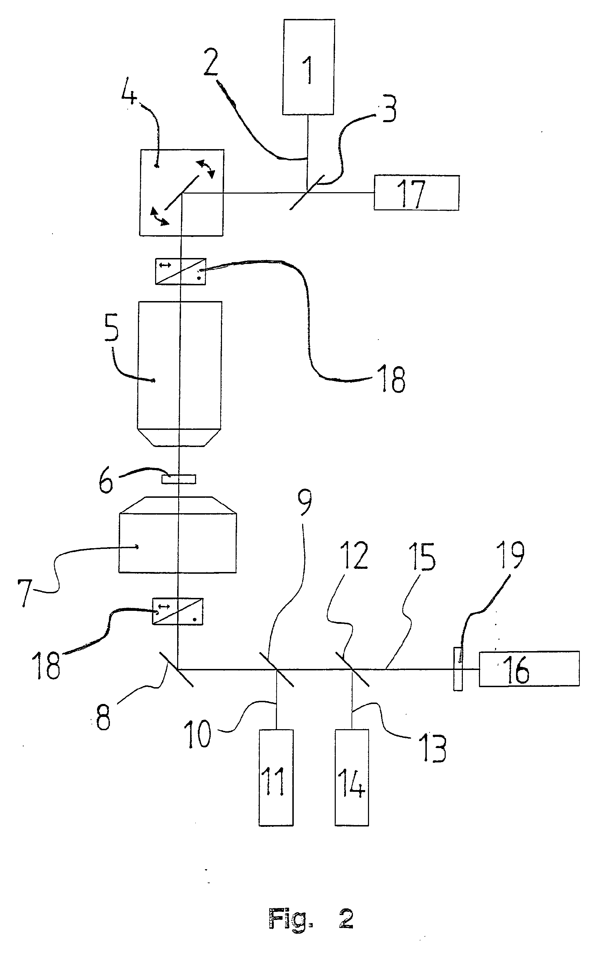

Fig. 2 zeigt in einer schematischen Darstellung ein zweites Ausführungsbeispiel eines erfindungsgemäßen Mikroskop-Aufbaus. Der in Fig. 2 gezeigte Mikroskop-Aufbau entspricht im wesentlichen dem Mikroskop-Aufbau aus Fig. 1, wobei Bauelemente, die bereits in Fig. 1 beschriebenen Bauelementen entsprechen, mit denselben Bezugsziffern bezeichnet sind.

Der in Fig. 2 gezeigte Mikroskop-Aufbau ist insbesondere zur differentiellen Interferenzkontrastierung - DIC - bei simultaner Fluoreszenzdetektion geeignet. Hierzu weist der Mikroskop-Aufbau zwei als Polarisationsprismen 18 ausgebildete Polarisationseinrichtungen auf. Die Polarisationsprismen 18 sind durch sog. Wollaston-Prismen gebildet. Das eine Polarisationsprisma 18 ist zwischen der Lichtquelle 1 und dem Objekt 6, genauer gesagt vor dem Objektiv 5, angeordnet. Das zweite Polarisationsprisma 18 ist nach dem Objekt 6, genauergesagt nach dem Kondensor 7, angeordnet.

Mittels der differentiellen Interferenzkontrastierung können Phasenobjekte bei gleichzeitiger Fluoreszenzdetektion beobachtet werden. Das linear polarisierte Anregungslicht der als Laser ausgebildeten Lichtquelle 1 wird vor dem Objektiv 5 mit Hilfe des ersten Polarisationsprismas 18 in zwei Teilstrahlen aufgespalten. Anschliessend durchlaufen die beiden Teilstrahlen das Objekt 6 auf leicht verschiedenen Wegen, um nach dem Kondensor 7 mit Hilfe des zweiten Polarisationsprismas 18 vereinigt zu werden. Haben die beiden Teilstrahlen unterschiedlich lange optische Weglängen zurückgelegt, so äussert sich dies nach der Strahlvereinigung in einer Drehung der Linearpolarisationsebene, welche mit Hilfe eines Polarisationsfilters 19 vor dem Transmissionslicht-Detektor 16 analysiert wird. Der Polarisationsfilter 19 muss dabei so orientiert sein, dass er einen ohne Polarisationsprismen 18 direkt durchgehenden Beleuchtungsstrahl blockieren würde.

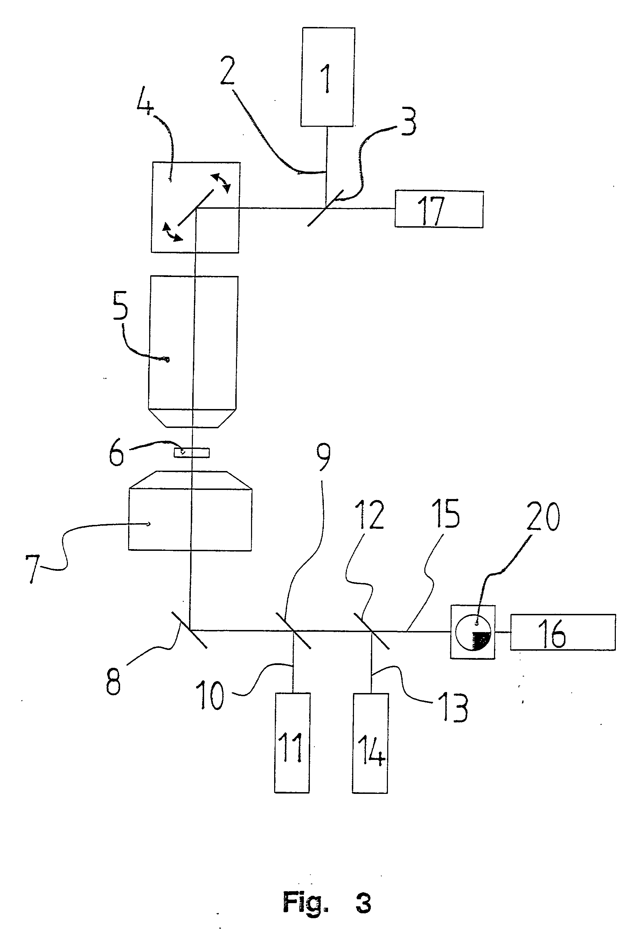

Fig. 3 zeigt in einer schematischen Darstellung ein drittes Ausführungsbeispiel eines erfindungsgemäßen Mikroskop-Aufbaus. Der hier gezeigte Mikroskop-Aufbau entspricht im wesentlichen dem in Fig. 1 gezeigten Mikroskop-Aufbau, wobei Bauelemente, die bereits in Fig. 1 beschriebenen Bauelementen entsprechen, mit denselben Bezugsziffern bezeichnet sind.

Der in Fig. 3 gezeigte Mikroskop-Aufbau kann insbesondere zur Phasenkontrastierung verwendet werden. Hierzu weist der Mikroskop-Aufbau eine in der Fourier-Ebene vor dem Transmissionslicht-Detektor 16 angeordnete Segmentblende 20 auf. Dabei ist simultan Fluoreszenzlicht 10 und 13 beobachtbar.

Mit der Segmentblende 20 ist das Dodt-Verfahren durchführbar. Alternativ zu einer Segmentblende 20 ist auch eine Segmentpolarisationsoptik einsetzbar, mit der bspw. das Hoffman-Verfahren durchführbar ist, wobei simultan das Fluoreszenzlicht 10 und 13 beobachtbar ist. Bei einer Einphotonenanregung ist das Fluoreszenzlicht 10 und 13 jedoch nicht konfokal beobachtbar.

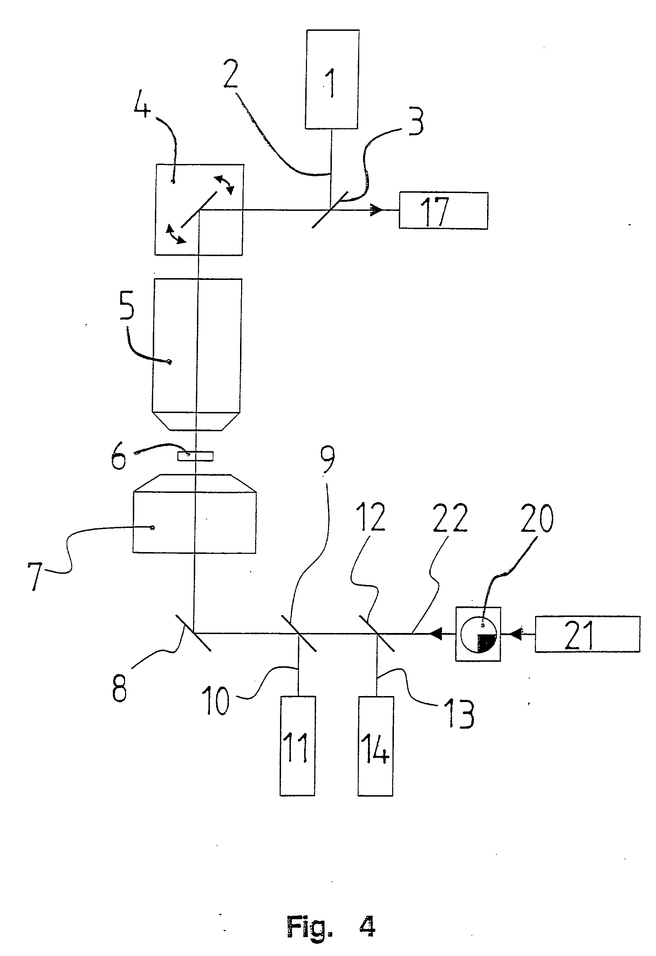

Fig. 4 zeigt in einer schematischen Darstellung ein viertes Ausführungsbeispiel eines erfindungsgemäßen Mikroskop-Aufbaus. Der in Fig. 4 gezeigte Mikroskop-Aufbau entspricht größtenteils dem in Fig. 1 gezeigten Mikroskop-Aufbau, wobei Bauelemente, die bereits in Fig. 1 beschriebenen Bauelementen entsprechen, mit denselben Bezugsziffern bezeichnet sind.

Bei dem in Fig. 4 gezeigten Mikroskop-Aufbau ist das Objekt 6 mittels einer Zusatz-Lichtquelle 21 auch kondensorseitig beleuchtet. Die Zusatz-Lichtquelle 21 ist somit auf der der Lichtquelle 1 abgewandten Seite des Objekts 6 angeordnet. Es liegt hierbei also ein zusätzlicher umgekehrter Strahlverlauf vor.

Der Zusatz-Lichtquelle 21 ist zur Phasenkontrastierung eine Segmentblende 20 in der Fourier-Ebene vor der Zusatz-Lichtquelle 21 zugeordnet. Die Zusatz-Lichtquelle 21 erzeugt einen Beleuchtungslichtstrahl 22, der durch die Probe 6 hindurch verläuft und mittels des Detektors 17 detekiert wird. Vor der Detektion erfährt der Beleuchtungslichtstrahl 22 einen Scanvorgang mittels der Scaneinrichtung 4. Der Transmissionslicht-Detektor 17 könnte auch als Scanner-Detektor bezeichnet werden. Durch diesen Scanner-Detektor 17 kann bspw. das Dodt- oder Hoffman-Licht erfasst werden.

Der erfindungsgemäße Mikroskop-Aufbau könnte insbesondere bei der Zweiphotonenanregung verwendet werden, da hier eine Differenzierung von Fluoreszenzphotonen aus der Fokusregion von Fluoreszenzphotonen aus den Nachbarregionen mit einer Blendenanordnung überflüssig ist. Des weiteren bietet sich der Mikroskop-Aufbau zur Interferenzkontrast-Mikroskopie mit Hilfe von Polarisationsprismen und zur Durchlichtkontrastmikroskopie mit Hilfe von Segmentblenden an.

Der Mikroskop-Aufbau kann zur sequentiellen Detektion verschiedener Fluoreszenzspektralbereiche und/oder von Transmissionslicht ohne mechanische Umschaltvorgänge verwendet werden. Dabei ist der Mikroskop-Aufbau insbesondere für Anwendungen mit Mikropipetten, Mikromanipulatoren oder ähnlichem geeignet.

Hinsichtlich weiterer vorteilhafter Ausgestaltungen des erfindungsgemäßen Mikroskop-Aufbaus wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele des erfindungsgemäßen Mikroskop-Aufbaus lediglich zur Erörterung der beanspruchten Lehre dienen, diese jedoch nicht auf diese Ausführungsbeispiele einschränken.

## Patentansprüche

1. Mikroskop-Aufbau, insbesondere für die konfokale Scan-Mikroskopie, mit einer Lichtquelle (1) zur Beleuchtung eines zu untersuchenden Objekts (6) und mindestens einem Fluoreszenzlicht-Detektor (11, 14) zur Detektion von in dem Objekt (6) erzeugtem Fluoreszenzlicht (10, 13) und mindestens einem Transmissionslicht-Detektor (16) zur Detektion von durch das Objekt (6) tretendem Transmissionslicht (15), **dadurch gekennzeichnet**, dass die Fluoreszenzlicht- und Transmissionslicht-Detektoren (11, 14; 16) derart angeordnet sind, dass eine simultane Detektion von Fluoreszenz- und Transmissionslicht (10, 13; 15) ermöglicht ist.

2. Mikroskop-Aufbau nach Anspruch 1, dadurch gekennzeichnet, dass mindestens ein Fluoreszenzlicht-Detektor (11, 14) und/oder mindestens ein Transmissionslicht-Detektor (16) auf der der Lichtquelle (1) abgewandten Seite des Objekts (6) angeordnet ist.

3. Mikroskop-Aufbau nach Anspruch 1 oder 2, dadurch gekennzeichnet, dass auf der der Lichtquelle (1) abgewandten Seite des Objekts (6) ein Kondensor (7) für das Transmissionslicht (15) und das Fluoreszenzlicht (10, 13) angeordnet ist, wobei die Apertur des Kondensors (7) vorzugsweise größer als die Apertur eines zwischen der Lichtquelle (1) und dem Objekt (6) angeordneten Objektivs (5) ist.

4. Mikroskop-Aufbau nach einem der Ansprüche 1 bis 3, dadurch gekennzeichnet, dass das Transmissionslicht (15) und das Fluoreszenzlicht (10, 13) auf der der Lichtquelle (1) abgewandten Seite des Objekts (6), vorzugsweise nach Durchgang durch den Kondensor (7), aufspaltbar ist.

5. Mikroskop-Aufbau nach Anspruch 4, dadurch gekennzeichnet, dass zur Aufspaltung mindestens ein Farbstrahlteiler (9, 12), wobei vorzugsweise mehrere Farbstrahlteiler (9, 12) hintereinander angeordnet sind, und/oder mindestens ein teildurchlässiger Spiegel und/oder ein Multibanddetektor eingesetzt sind oder ist.

6. Mikroskop-Aufbau nach Anspruch 5, dadurch gekennzeichnet, dass dem Spiegel oder den Spiegeln ein Band- oder Blockfilter nachgeordnet ist und/oder dass mehrere Spiegel hintereinander angeordnet sind.

7. Mikroskop-Aufbau nach einem der Ansprüche 1 bis 6, dadurch gekennzeichnet, dass das Fluoreszenzlicht (10, 13) und das Transmissionslicht (15) im selben Detektor oder in verschiedenen Detektoren (11, 14; 16) detektierbar sind.

8. Mikroskop-Aufbau nach einem der Ansprüche 1 bis 7, dadurch gekennzeichnet, dass zwischen der Lichtquelle (1) und dem Objekt (6), vorzugsweise vor dem Objektiv (5), eine erste Polarisationseinrichtung und nach dem Objekt (6), vorzugsweise nach dem Kondensor (7), eine zweite Polarisationseinrichtung angeordnet sind.

9. Mikroskop-Aufbau nach Anspruch 8, dadurch gekennzeichnet, dass die Polarisationseinrichtungen Prismen (18), vorzugsweise Wollaston-Prismen, sind.

10. Mikroskop-Aufbau nach einem der Ansprüche 1 bis 9, dadurch gekennzeichnet, dass vor dem Transmissionslicht-Detektor (16) ein Polarisationsfilter (19) angeordnet ist.

11. Mikroskop-Aufbau nach einem der Ansprüche 1 bis 10, dadurch gekennzeichnet, dass im Strahlengang eine Segmentoptik, Segmentpolarisationsoptik, Segmentblende (20), Segmentphasenblende oder ein Segmentphasenfilter, vorzugsweise in einer Fourier-Ebene des Strahlengangs und noch bevorzugter in der Fourier-Ebene unmittelbar vor dem Transmissionslicht-Detektor (16), angeordnet ist.

12. Mikroskop-Aufbau nach einem der Ansprüche 1 bis 11, dadurch gekennzeichnet, dass eine Zusatz-Lichtquelle (21), vorzugsweise eine Weißlichtquelle, auf der der Lichtquelle (1) abgewandten Seite des Objekts (6) angeordnet ist.

13. Mikroskop-Aufbau nach Anspruch 12, dadurch gekennzeichnet, dass der Zusatz-Lichtquelle (21) eine Segmentoptik, Segmentpolarisationsoptik, Segmentblende (20), Segmentphasenblende oder ein Segmentphasenfilter zugeordnet ist, wobei die Segmentoptik, Segmentpolarisationsoptik, Segmentblende (20), Segmentphasenblende oder der Segmentphasenfilter vorzugsweise in der Fourier-Ebene vor der Zusatz-Lichtquelle (21) angeordnet ist.

14. Mikroskop-Aufbau nach einem der Ansprüche 1 bis 13, dadurch gekennzeichnet, dass auf der der Lichtquelle (1) zugewandten Seite des Objekts (6) eine Scaneinrichtung (4) angeordnet ist und/oder dass die Lichtquelle (1) ein Laser ist.

15. Mikroskop-Aufbau nach einem der Ansprüche 1 bis 14, dadurch gekennzeichnet, dass auf der der Lichtquelle (1) zugewandten Seite des Objekts (6), vorzugsweise auf der dem Objekt (6) abgewandten Seite der Scaneinrichtung (4), mindestens ein Transmissionslicht-Detektor (17) angeordnet ist.
